# EUROPÄISCHE PATENTANMELDUNG

(11) **EP 4 495 817 A1**
(43) Veröffentlichungstag der Anmeldung: **22.01.2025**
(21) Anmeldenummer: 23186396.0
(22) Anmeldetag: 19.07.2023
(51) Int. Cl.: G06F 21/57, G06F 21/64, H04L 9/32, H04L 9/40

(54) **ATTESTIERUNG**

(71) Anmelder: Siemens Aktiengesellschaft, 80333 München (DE)
(72) Erfinder: Falk, Rainer, 85435 Erding (DE); Feist, Christian Peter, 80689 München (DE); Kumari, Ankita, 81549 München (DE); Piccoli, Alessandro, 80333 München (DE); Pyka, Stefan, 85570 Markt Schwaben (DE); Zeschg, Thomas, 81543 München (DE)
(74) Vertreter: Siemens Patent Attorneys

(57) **Zusammenfassung**

Die Erfindung betrifft Verfahren und eine Vorrichtung zum Bereitstellen einer Attestierungsinformation betreffend einer Konfigurationsinformation eines Geräts, wobei eine aktuelle Konfiguration des Geräts mittels der Konfigurationsinformation durch eine Gerätemanagementeinheit verwaltet wird, bei dem die Attestierungsinformation auf Basis der Konfigurationsinformation durch eine Attestierungseinheit erstellt wird, die der Gerätemanagementeinheit zugeordnet ist.

## Beschreibung

Die Erfindung betrifft Verfahren und eine Vorrichtung zum Bereitstellen einer Attestierungsinformation.

Bei einer technischen Anlage, wie zum Beispiel einer Produktionsanlage, einem Eisenbahnstellwerk oder einem Smart Home System, werden mehrere einzelne Geräte datentechnisch miteinander verbunden, um gemeinsam eine Aufgabe, wie beispielsweise die Fertigung eines Produkts, eine Sicherung eines Eisenbahnabschnitts oder eine Raumüberwachung in einem Privathaus, zu erledigen.

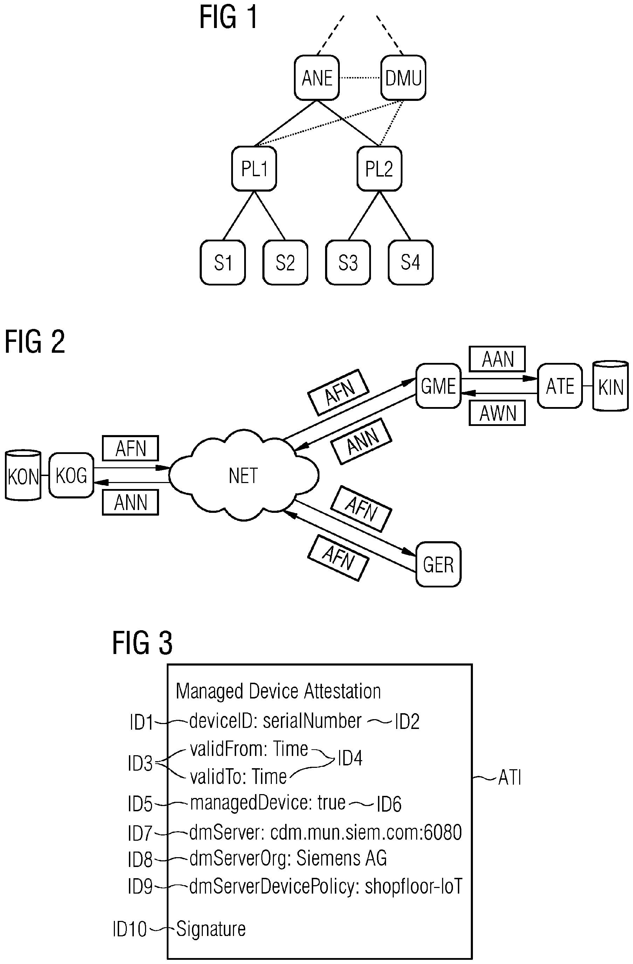

Figur 1 zeigt exemplarisch eine technische Anlage mit einer Vielzahl von Geräten ANE, PL1, PL2, S1, ..., S4, siehe jeweilige Kästchen, die datentechnisch miteinander zum Austausch von Informationen, wie Anweisungen oder Messwerten, verbunden sind, siehe Verbindungen zwischen den Kästchen. Die Geräte S1,... , S4 sind Messsensoren, die Temperatur, Drehzahl oder Stockoxidkonzentration erfassen, und an die mit ihnen verbundenen programmierbaren Steuereinheiten PL1, PL2 weiterreichen. Die programmierbaren Steuereinheiten sind ihrerseits datentechnisch mit einer übergeordneten Steuereinheit ANE verbunden, die mehrere programmierbare Steuereinheiten, beispielsweise einer Fertigungsanlage, steuert. Ferner können weitere Einheiten mit der Steuereinheit und den programmierbaren Steuereinheiten in Verbindung stehen, wie beispielsweise eine Gerätemanagementeinheit DMU, die eine Konfiguration eines jeweiligen Geräts, wie beispielsweise ein Betriebssystem, Sicherheitseinstellungen oder Parametrisierungen, bereitstellt.

Auf der einen Seite bietet die Digitalisierung mittels einer derartigen technischen Anlage die Möglichkeit, eine Vielzahl von Aufgaben zu lösen. Auf der anderen Seite können Cyberangriffe, wie beispielsweise durch Virus oder Malware verursacht, eine Funktionalität einzelner Geräte oder der gesamten Anlage stören und so einen immensen wirtschaftlichen Schaden verursachen. Es sind mehrere Verfahren bekannt, die eine Sicherheit von Geräten und/oder einer gesamten technischen Anlage verbessern können. IT- und ICT-basierte Anlagen (IT: Information Technology, ICT: Information and Communication Technology) nutzen in zunehmendem Maße eine Attestierung, um eine kryptographiegeschützte Bestätigung, beispielsweise eines Geräteintegritätszustands, einer geladenen Software oder einer technischen Realisierung einer Schlüsselspeicherung, manipulationsgeschützt zu bestätigen. Bekannte Verfahren sind beispielsweise ein play-integrity-attestation Verfahren des Betriebssystems Android, das einer App ermöglicht nachzuweisen, dass diese über den Google play-Store installiert wurde und mit der im play-Store bereitgestellten Version übereinstimmt. Weitere bekannte Verfahren sind die Microsoft Azure Attestation und die TCG DICE Attestation für kleine IoT-Geräte (TCG: Trusted Computing Group; DICE: Device Identifier Composition Engine).

Jedoch benötigen Geräte, die ein derartiges Attest ausstellen wollen, zum einen als "Root of Trust for Reporting" (RTR) ein Sicherheitselement mit einem Attestierungsschlüssel zum Bilden der eigentlichen Attestierung, und zum Anderen eine Messeinheit als "Root of Trust for Measurement" (RTM), die verlässlich die zu attestierenden Informationen ermittelt. Auf manchen Geräten, z.B. auf PCs, kann dies mittels eines Trusted Platform Moduls TPM als ""Root of Trust for Reporting" und einem zugeordneten "Root of Trust for Measurement"-Moduls erfolgen. Eine Vielzahl von Geräten in bestehenden technischen Anlagen weisen keine Funktionalitäten auf, mit denen die Attestierung erfolgen kann.

Daher besteht ein Bedarf, Verfahren und Vorrichtungen bereitzustellen, die die Attestierung für ein Gerät vereinfachen bzw. verbessern und somit zu einer Steigerung einer Cybersicherheit bei Verwendung des Geräts zum Beispiel in der technischen Anlage beitragen.

Diese Aufgabe wird gelöst durch die unabhängigen Patentansprüche. Weiterbildungen der Erfindung sind den abhängigen Ansprüchen zu entnehmen.

Die Erfindung betrifft ein Verfahren zum Bereitstellen einer Attestierungsinformation betreffend einer Konfigurationsinformation eines Geräts, wobei eine aktuelle Konfiguration des Geräts mittels der Konfigurationsinformation durch eine Gerätemanagementeinheit verwaltet wird, wobei die Attestierungsinformation auf Basis der Konfigurationsinformation durch eine Attestierungseinheit erstellt wird, die der Gerätemanagementeinheit zugeordnet ist.

Die Erstellung der Attestierungsinformation durch die Attestierungseinheit, die der Gerätemanagementeinheit zugeordnet ist, ist vorteilhaft, weil unabhängig von einer Möglichkeit, ob die Erstellung der Attestierungsinformation durch das Gerät gegeben ist oder nicht, eine Cybersicherheit beim Zugriff auf das Gerät, wie beispielsweise ein Steuern des Geräts oder ein Datenaustausch, erhöht werden kann. Hierdurch zeigt sich auch der Vorteil, dass durch den Einsatz der Gerätemanagementeinheit zusammen mit der Attestierungseinheit eine Vereinfachung beim Erstellen und Bereitstellen der Attestierungsinformation ermöglicht wird.

Ein weiterer Vorteil ist, dass durch das Verfahren keine unerwünschte Rückwirkung auf eine Funktionalität des Geräts entsteht, weil die Attestierungsinformation durch die Attestierungseinheit, die der Gerätemanagementeinheit zugeordnet ist, erstellt wird.

Die Gerätemanagementeinheit realisiert in dieser Erfindung ein "Root of Trust for Measurement", um Konfigurationsinformationen des Geräts zu ermitteln, sowie ein "Root of Trust for Reporting", um die ermittelte Konfigurationsinformation kryptographiegeschützt zu bestätigen, d.h. um die Attestierungsinformation zu bilden. Das bedeutet, dass nicht das Gerät selbst diese vertrauenswürdigen Komponenten umfassen muss, sondern dass dies die Attestierungseinheit, die Teil der Gerätemanagementeinheit oder mit dieser in Verbindung steht, aufweist. Dies hat den Vorteil, dass eine Geräteattestierung auch für solche Geräte vertrauenswürdig gebildet werden kann, die selbst keine geschützte Ausführungsumgebung TEE (TEE: Trusted Execution Environment) zum vertrauenswürdigen, manipulationsgeschützten Ermitteln der zu attestierenden Informationen und zum Bilden der Attestierung aufweisen muss. Die zu attestierende Konfigurationsinformation kann hierbei durch die Gerätemanagementeinheit bereitgestellt werden, zum Beispiel über ein Gerätemessprotokoll wie OMA DM (OMA: Open Mobile Alliance; DM: Device Management), SNMP (SNMP: Simple Network Management Protocol), OPC UA (OPC: Open Platform Communications, UA: Unified Architecture) NETCONF (NETCONF: Network Configuration Protocol) oder RESTCONF (RESTCONF: Representational State Transfer Configuration Protocol).

Das Gerät ist beispielsweise als Industrial IoT Gerät (IoT: Internet of Things) in Form eines Steuergeräts, eines RemoteIO-Geräts (I: Input; O: Output), PLC (PLC: Programmable Logic Controller), oder als Industrial TSN Network Switch (TSN: Time-Sensitive Networking) ausgestaltet.

Unter Attestierungsinformation wird, die aus der Konfigurationsinformation des Geräts und ggfs. weiterer Informationen ermittelte Information verstanden, die mit Hilfe eines Sicherheitselements, das einen Attestierungsschlüssel zum Bilden einer kryptographischen Prüfsumme, insbesondere einer digitalen Signatur, nutzt, kryptographisch geschützt ist. Das Sicherheitselement ist beispielsweise als TPM (TPM: Trusted Platform Module), als Crypto-Controller, als ARM TrustZone oder als eine SGX-Enklave (SGX: Software Guard Extensions) ausgestaltet. Die Attestierungsinformation kann als digitales Zertifikat (Authentisierungszertifikat, Attribut-Zertifikat), als Verifiable Credential, als ein signiertes JSON Web Token oder als signierte XML-Daten ausgebildet sein.

Unter einem Begriff ,zugeordnet' wird im Rahmen dieser Beschreibung verstanden, dass die Attestierungseinheit Teil der Gerätemanagementeinheit ist oder die Attestierungseinheit eine eigenständige, mit der Gerätemanagementeinheit datentechnisch bzw. kommunikativ verbundene Einheit ist, mit der die Gerätemanagementeinheit Informationen austauschen kann, um das Erstellen der Attestierungsinformation anzustoßen und diese von der Attestierungseinheit übermittelt zu bekommen.

Die aktuelle Konfiguration des Geräts umfasst unter anderem die durch die Konfigurationsinformation voreingestellten Konfigurationsparameter.

Unter der Gerätemanagementeinheit wird in dieser Beschreibung eine Einheit verstanden, die Konfigurationsinformationen des Geräts verwaltet. Dabei wird das Gerät durch die Gerätemanagementeinheit auf Basis der Konfigurationsinformation konfiguriert. Da sich die Konfigurationsinformation über der Zeit ändern kann, beispielsweise aufgrund unterschiedlich zu fertigender Produkte oder aufgrund geänderter Sicherheitsanforderungen, kann die Konfiguration des Geräts durch die Gerätemanagementeinheit über der Zeit mehrfach stattfinden. Zudem kann auch die Gerätemanagementeinheit die Konfigurationsinformation selbstständig ändern. Derartige Gerätemanagementeinheiten sind beispielsweise unter einem Namen Enterprise Mobile Device Manager, Unified Endpoint Management und Common Device Management für Industriegeräte bekannt.

Gemäß einer Weiterbildung des Verfahrens weist die Attestierungsinformation zumindest eine der folgenden Informationen auf:
- die Konfiguration des Geräts wird von der Gerätemanagementeinheit verwaltet;
- ein Ist-Zustand der Konfiguration des Geräts;
- ein Soll-Zustand der Konfiguration des Geräts;
- eine Gültigkeitsdauer der Konfigurationsinformation;
- eine Art einer Authentisierung des Geräts gegenüber der Gerätemanagementeinheit und/oder der Gerätemanagementeinheit gegenüber dem Gerät;
- eine eindeutige Identifikationsinformation des Geräts, insbesondere seine Seriennummer oder seine MAC-Adresse;
- Lokale Konfigurationseinstellungen des Geräts;
- Fest integrierte oder lösbar verbundene Hardware-Komponenten des Geräts;
- eine Angabe eines Produktionsauftrags und/oder eines Produktionsschritts, für die die Attestierungsinformation (ATI) gültig ist;
- eine Angabe zu einem Ergebnis eines Security-Selbsttests.

Hierbei ist vorteilhaft, dass eine oder mehrere der zuletzt genannten Informationen beitragen können, die Sicherheit beim Zugriff auf das Gerät, wie beispielsweise ein Steuern des Geräts oder ein Datenaustausch, zu erhöhen.

Besonders vorteilhaft ist die Information, dass die Konfiguration des Geräts von der Gerätemanagementeinheit verwaltet wird. Hierdurch kann ein Kommunikationspartner, wie das Kommunikationsgerät, darauf schließen, dass das Gerät zuverlässiger gewartet wird, als wenn keine Gerätemanagementeinheit eingesetzt wird. Somit zeigt diese Information eine erhöhte Sicherheit im Zusammenspiel zwischen einem Kommunikationsgerät und dem Gerät auf. Zudem kann das Kommunikationsgerät auch explizite Anfragen über das Gerät an die Gerätemanagementeinheit stellen, um somit zusätzliche Informationen, die beispielsweise nicht in der Attestierungsinformation vorliegen, gezielt abfragen zu können.

In vorteilhafter Weise umfasst die Attestierungsinformation einen Ist-Zustand der Konfiguration des Geräts. Hierbei kann das Gerät zu vorgebbaren Zeitpunkten seine aktuelle Konfiguration an die Gerätemanagementeinheit übermitteln, die diese bei der Erstellung der Attestierungsinformation zur Verfügung stellt. Zudem kann die Attestierungsinformation auch einen Soll-Zustand der Konfiguration des Geräts aufweisen, der beispielsweise der in der Gerätemanagementeinheit verwalteten Konfigurationsinformation entspricht. Durch den Ist-Zustand bzw. den Soll-Zustand ist das Kommunikationsgerät in der Lage, Abweichungen in der Konfiguration zu erkennen und daraus zu ermitteln, ob das Gerät beispielsweise für einen zukünftigen Einsatz bei einer Produktion eines Produktes eingesetzt werden kann. Zudem können erkannte Abweichungen dazu genutzt werden, die Gerätemanagementeinheit zu veranlassen, die Konfigurationsinformation zu aktualisieren und diese dem Gerät zu übermitteln. Beispielsweise gibt die Soll-Konfiguration eine Soll-Filterpolicy eines Netzwerkkommunikationsfilters (Packetfilter, Firewall) des Geräts an. Zeigt der Ist-Zustand an, dass keine Filterpolicy oder eine andere Filterpolicy auf dem Gerät eingerichtet ist, so kann das Kommunikationsgerät bzw. die Gerätemanagementeinheit das Gerät anweisen, die Filterpolicy zu aktualisieren, oder das Kommunikationsgerät kann die Datenübertragung mit dem Gerät sperren oder beschränken. Weiterhin kann ein Soll-Zustand der Konfiguration angeben, welche Abweichungen ein Bohrer oder Fräskopf aufweisen darf, damit das Produkt ohne Fehler produziert werden kann. Zeigt nun der ist-Zustand an, dass die Abweichung des Bohrers, beispielsweise durch Verschleiß, größer ist als der Soll-Zustand, so kann das Kommunikationsgerät bzw. die Gerätemanagementeinheit das Gerät anweisen, den Bohrer automatisch auszuwechseln. Durch diese Informationen kann somit auch die Sicherheit des Geräts bzw. der Anlage gesteigert werden, da ein potentieller Fehler bei der Fertigung eines Produktes frühzeitig erkannt und aktiv behoben werden kann.

Die Information der Gültigkeitsdauer der Konfigurationsinformation zeigt den Vorteil, dass eine veraltete Konfiguration des Geräts anhand der Gültigkeitsdauer erkannt werden können. Dadurch kann das Kommunikationsgerät die Steuerung des Geräts und oder den Datenaustausch mit dem Gerät einstellen, falls die aktuelle Konfiguration als veraltet erkannt worden ist. Dies ist beispielsweise dann von Vorteil, wenn die veraltete Konfiguration sicherheitsrelevante Aktualisierungen des Geräts nicht umfasst, wie beispielsweise ein regelmäßiges Aktualisieren von Passwörtern. Diese Information kann beispielsweise mittels eines Gültigkeitszeitfensters oder eines Zählerwerts (Epoche Counter) realisiert werden. Somit trägt diese Information zur Erhöhung einer Cybersicherheit des Geräts bzw. der Anlage bei.

Die Information über eine Art der Authentisierung des Geräts gegenüber der Gerätemanagementeinheit und/oder der Gerätemanagementeinheit gegenüber dem Gerät zeigt den Vorteil, dass bei einer schwachen Authentisierung eine Gefahr einer Manipulation von Konfigurationsinformationen, mit denen das Gerät konfiguriert werden soll, höher sein kann als bei einer starken Authentifizierung. Somit kann das Kommunikationsgerät, das beispielsweise eine sicherheitskritische Anwendung durch das Gerät ausführen lassen möchte, das Ausführen verhindern, falls eine schwache Authentisierung erkannt wird. Dies führt zu einer Erhöhung einer Cybersicherheit des Geräts bzw. einer mit dem Gerät realisierten Anwendung.

Eine weitere Information, die die Attestierungsinformation umfassen kann, ist die eindeutige Identifikationsinformation des Gerätes, insbesondere seine Seriennummer oder seine MAC Adresse. Besonders vorteilhaft für diese Art an Information sind Informationen des Gerätes, die sich im Betrieb nicht ändern, also feste Konfigurationseigenschaften. So kann bei dieser Information von einer zu einer weiteren Attestierungsinformation erkannt werden, dass eine Manipulation des Geräts stattgefunden haben kann. Somit kann diese Information beitragen, eine Cybersicherheit des Geräts bzw. einer Anlage und oder einer durch das Gerät realisierten Anwendung zu erhöhen.

Vorzugsweise umfasst die Attestierungsinformation auch lokale Konfigurationseinstellungen des Gerätes, wie beispielsweise ein Nutzerpasswort, bzw. Merkmale des Nutzerpassworts (z.B. Länge und/oder das Beinhalten von Klein-/Großbuchstaben, Zahlen, Sonderzeichen, usw.). Lokale Konfigurationseinstellungen in der Attestierungsinformation zeigen den Vorteil, dass einer Beurteilung einer Vertrauenswürdigkeit des Gerätes erkannt werden kann, ob lokale Einstellungen die Vertrauenswürdigkeit möglicherweise reduzieren. Beispielsweise zeigt ein zu kurzes Nutzerpasswort, dass eine Cybersicherheit des Gerätes und gegebenenfalls mehrerer mit dem Gerät in Verbindung stehender Geräte reduziert sein kann.

Ferner ist auch ein Aufnehmen der Information von fest integrierten oder lösbar verbundenen Hardwarekomponenten des Gerätes in die Attestierungsinformation wünschenswert. So kann beispielsweise erkannt werden, dass ein USB-Stick (USB: Universal Serial Bus) in das Gerät eingesteckt worden ist, und dadurch eine Integrität des Gerätes geschwächt oder verletzt werden könnte. Auch ein Austausch einer Hardwarekomponente, die fest mit dem Gerät verbunden ist, wie beispielsweise eine Speicher- oder Ein-/Ausgabeeinheit, kann bei einer Überprüfung der Attestierungsinformation ein Indikator für eine Verletzung der Integrität des Geräts sein und somit eine Schwächung einer Cybersicherheit des Geräts anzeigen.

Vorteilhaft ist auch eine Angabe eines Produktionsauftrags und/oder eines Produktionsschritts, für die die Attestierungsinformation gültig ist. Hiermit wird eine Beurteilung der Attestierungsinformation für ein Kommunikationsgerät erleichtert, weil die Zuordnung der Konfigurationsinformation zu dem Produktionsauftrag bzw. dem Produktionsschritt vereinfacht wird. Dies führt auch zu einer Erhöhung einer Sicherheit des Geräts, da eine potentielle Verwechslung zwischen Produktionsauftrag bzw. Produktionsschritt und Konfigurationsinformation vermieden werden kann.

Ferner kann auch eine Angabe zu einem Ergebnis eines Security Selbsttests des Geräts eine Cybersicherheit des Geräts erhöhen. Das Angeben eines Bestehens oder Nichtbestehens eines Security Selbsttests in der Attestierungsinformation kann dazu verwendet werden, dass eine Beurteilung, ob ein Gerät noch integer ist oder nicht, verbessert werden kann. Somit trägt diese spezifische Information dazu bei, eine Cybersicherheit des Geräts und auch einer ganzen Anlage zu verbessern.

In einer vorzugsweisen Weiterbildung der Erfindung wird die Attestierungsinformation zu einem Zeitpunkt einer Änderung der Konfigurationsinformation des Geräts erzeugt. Dies ist vorteilhaft, weil somit eine aktuelle Attestierungsinformation immer bereitsteht, um von dem Kommunikationsgerät abgerufen zu werden. Zudem werden nicht nur die aktuelle Verfügbarkeit der Attestierungsinformation verbessert, sondern auch Verzögerungen bei einem Abruf der Attestierungsinformation vermieden, da diese nicht erst gebildet werden muss.

In einer vorzugsweisen Weiterbildung der Erfindung wird die Attestierungsinformation nach einem Zeitpunkt einer Änderung der Konfigurationsinformation des Geräts erzeugt, wobei der Zeitpunkt derart gewählt wird, dass das Gerät sich in einem Ruhezustand oder einem Wartungszustand befindet. Die Attestierungsinformation kann neben Konfigurationsinformationen des Gerätes auch aktuelle Informationen des Gerätes, wie beispielsweise eine neue IP-Adresse (IP: Internetprotokoll) oder im Gerät entstandene Fehler, aufweisen. Die jeweilige aktuelle Information ist für das Kommunikationsgerät bei einer Entscheidung darüber nutzbar, ob das Gerät beispielsweise zur Produktion eines Produktes oder zur Übermittlung kritischer Produktionsdaten eingesetzt werden kann in Abhängigkeit von im Gerät detektierten Fehlern. So kann der detektierte Fehler beispielsweise einen Phishing-Versuch, ein defektes Sicherheitselement oder Speicherbaustein oder einen Eindringversuch zur Kompromittierung einer Cybersicherheit des Gerätes anzeigen. Somit kann das Kommunikationsgerät das Gerät von einer weiteren Betrachtung zur Produktion eines Produktes ausschließen, wenn derartige Fehler erkannt werden.

Jedoch kann ein Abrufen der aktuellen Information von dem Gerät zu Beeinträchtigungen in dessen Funktionalität führen, weil beispielsweise eine Echtzeitfähigkeit durch den Abruf kurzzeitig nicht gewährleistet ist. Daher ist es vorteilhaft, wenn die aktuelle Information zu Zeitpunkten abgerufen wird, an denen sich das Gerät in einer Wartung oder Ruhezustand befindet. Daher ist es von Vorteil, wenn die Attestierungsinformation nach einem Zeitpunkt einer Änderung der Konfigurationsinformation des Geräts erzeugt wird, wobei der Zeitpunkt derart gewählt wird, dass das Gerät sich in einem Ruhezustand oder einem Wartungszustand befindet. Zur Ermittlung dieser Zeitpunkte kann beispielsweise das Gerät selbst, z.B. über ein OPC UA Protokoll, oder ein Produktionsplanungssystem abgefragt werden, das Informationen zu aktuell und geplanten Produktionsvorgängen verwaltet. Dadurch können Security Prüfungen, zum Beispiel eine Geräteintegritätsprüfung, auf Basis der Gerätemanagementadressierung, während dieser Betriebsphasen durchgeführt werden, in denen sie nicht zu einer Beeinflussung von Produktionsvorgängen führen. Zudem kann die Integritätsprüfung vorgelagert vor Freigabe oder anstoßen eines geplanten Produktionsvorgangs erfolgen.

In einer vorzugsweisen Weiterbildung der Erfindung kann die Attestierungsinformation eine Angabe über deren Erzeugung aufweisen. Dadurch kann beispielweise erkannt werden, dass eine Attestierung durch ein Gerätemanagementsystem gebildet ist, basierend auf der im Gerätemanagementsystem vorliegenden Gerätekonfigurationsinformation, d.h. dass es sich bei der Attestierung um eine erfindungsgemäße Attestierungsinformation entsprechend der vorliegenden Patentschrift handelt. Dadurch kann diese von einer durch den Stand der Technik bekannten herkömmlichen Attestierung unterschieden werden. Weiterhin kann die Angabe über die Erzeugung der Attestierungsinformation den Vorteil aufweisen, dass damit das Kommunikationsgerät, welches die Attestierungsinformation anfordert und ggfs. auswertet, verschiedene Formate oder Kodierungen der Attestierungsinformation unterstützen kann. Somit erhöht diese Weiterbildung zum einen eine Flexibilität, da verschiedene Formate bzw. Kodierungen für die Bildung der Attestierungsinformation genutzt werden können. Ferner wird durch diese Weiterbildung auch eine Sicherheit beim Einsatz des erfindungsgemäßen Verfahrens erhöht, da Formate bzw. Kodierungen, die kompromittiert wurden, bei der zukünftigen Erstellung der Attestierungsinformation ausgeschlossen werden können und somit ein sicheres Erstellen der Attestierungsinformation auch für die Zukunft gewährleistet wird.

In einer vorzugsweisen Weiterbildung der Erfindung kann die Attestierungsinformation eine gerätespezifische Attestierungsinformation aufweisen, wobei die gerätespezifische Attestierungsinformation durch das Gerät selbst erzeugt wird. Diese Weiterbildung zeigt den Vorteil, dass beispielsweise gerätespezifische Informationen, die nicht Teil der Konfigurationsinformation sind, durch das Gerät selbst in sicher Art und Weise als gerätespezifische Attestierungsinformation bereitgestellt werden können. Hierdurch wird die Cybersicherheit bei einer Nutzung des Gerätes erhöht, da zum einen gerätespezifische Informationen in Form der gerätespezifischen Attestierungsinformation bereitgestellt werden, als auch, dass die Attestierungsinformation durch zwei Einheiten, d.h. durch das Gerät selbst und die Attestierungseinheit, gebildet wird und somit eine Manipulation der Attestierungsinformation erschwert wird.

In einer bevorzugten Weiterbildung der Erfindung umfasst die Erzeugung der Attestierungsinformation eine Prüfung, ob eine Authentifizierung des Geräts gegenüber der Gerätemanagementeinheit erfolgreich ist, wobei die Attestierungsinformation das Ergebnis dieser Prüfung umfasst. Die Authentifizierung des Geräts gegenüber der Gerätemanagementeinheit stellt sicher, dass Informationen zwischen dem Gerät und der Gerätemanagementeinheit in sichere Art und Weise ausgetauscht werden können. Zeigt die Prüfung, dass die Authentifizierung nicht erfolgreich war, so kann das Kommunikationsgerät entscheiden, dass das Gerät für den weiteren Einsatz zum Beispiel einer Produktion nicht sicher genug ist. Somit wird durch diese Weiterbildung erreicht, dass die Attestierungsinformation zusätzlich Informationen aufweist, die eine Beurteilung für eine sichere Nutzung des Geräts zusätzlich weiterbildet.

In einer vorzugsweisen Weiterbildung der Erfindung umfasst das Bereitstellen ferner, dass eine Anfragenachricht eines Kommunikationsgeräts zum Bereitstellen der Attestierungsinformation empfangen wird und die Attestierungsinformation mittels einer Antwortnachricht dem Kommunikationsgerät zugestellt wird. Diese Vorgehensweise ist vorteilhaft, weil das Kommunikationsgerät eine Anfragenachricht zur Bereitstellung der Attestierungsinformation an das Gerät stellen kann, auch wenn das Gerät selbst diese Funktionalität nur teilweise oder überhaupt nicht unterstützt. Insbesondere kann die an das Gerät gerichtete Anfragenachricht durch das Gerät an die Gerätemanagementeinheit weitergeleitet oder ohne Zustellung an das Gerät an die Gerätemanagementeinheit umgeleitet werden. Somit ist gewährleistet, dass die Anfragenachricht entweder durch das Gerät selbst oder durch die Gerätemanagementeinheit empfangen und verarbeitet wird. Diese Weiterbildung zeigt auch den Vorteil, dass ein einheitliches Vorgehen gewährleistet wird, unabhängig davon, ob das Gerät selbst die Erzeugung bzw. Bereitstellung einer Attestierungsinformation unterstützt oder nicht. Somit kann die Kommunikation mit dem Kommunikationsgerät vereinfacht werden, da dieses unabhängig von der Funktionalität des Geräts die Attestierungsinformation bereitgestellt bekommt.

Zur Vereinfachung der Kommunikation, falls das Gerät keine oder nur Teile der Attestierungsinformation selbst erstellen kann, kann durch die Gerätemanagementeinheit die Anfragenachricht aus einem Datenverkehr zwischen Gerät und Kommunikationsgerät herausgefiltert werden. Dies zeigt weiter den Vorteil, dass eine Latenzzeit zwischen Anfragenachricht und Antwortnachricht reduziert werden kann.

Die Erfindung zeichnet sich aus, dass eine verlässliche, manipulationsgeschützte Bestätigung in Form der Attestierungsinformation vorliegt, die anzeigt, dass ein bestimmtes Gerät tatsächlich von einem Gerätemanagementsystem verwaltet wird, d.h. dass Firmenvorgaben auf diesem Gerät umgesetzt werden. Ein Gerät, das von einem Gerätemanagementsystem verwaltet wird, kann auch als verwaltetes Gerät (engl. "managed device") bezeichnet werden. Diese Information kann bei einer Berechtigungsprüfung von einem Kommunikationspartner wie dem Kommunikationsgerät ausgewertet werden. Zudem kann eine Geräteattestierung in Form der Attestierungsinformation, die eine Integritätsinformation zu einem Gerät bereitstellt, durch die Gerätemanagereinheit stellvertretend für das Gerät gebildet werden. Dadurch kann eine Geräteintegritätsattestierung auch für Geräte gebildet werden, die selbst eine Attestierung nicht unterstützen. Dadurch können auch Geräte unterstützt werden, die eine Attestierung selbst nicht oder nicht hinreichend vertrauenswürdig umsetzen können. Es kann weiterhin eine einheitliche Attestierung gebildet werden für Geräte, die unterschiedliche Attestierungen bilden (z.B. unterschiedliche Formate, unterschiedliche Inhalte, unterschiedliche Semantik).

Die Erfindung betrifft auch eine Vorrichtung zum Durchführen eines Verfahrens gemäß zumindest einem der vorstehenden Verfahrensschritte, bei dem, mittels einem oder mehrerer Module einzelne Schritte des Verfahrens implementierbar und ausführbar sind. Diese Module können in Software, Hardware oder aus einer Kombination aus Software und Hardware zum Ausführen des Verfahrens realisiert werden. So können ein oder mehrere Module über einem Prozessor verfügen, der mit einer Speichereinheit und einer Eingabe- und/oder Ausgabeeinheit verbunden ist. Einzelne oder alle Verfahrensschritte können dabei als maschinenlesbarer Code in der Speichereinheit abgelegt sein und nacheinander zum Ausführen des Verfahrens in dem Prozessor gelesen und von diesem verarbeitet werden.

Die Erfindung betrifft auch ein Verfahren zum Verwenden einer Attestierungsinformation, die zumindest gemäß einem der vorstehenden Verfahrensschritte gebildet ist, wobei ein Kommunikationsgerät eine Kommunikation mit dem Gerät in Abhängigkeit einer Prüfung der Attestierungsinformation mit eigenen Regeln steuert, insbesondere einen Zugriff durch und/oder auf das Gerät und/oder einen Datenaustausch mit dem Gerät sperrt, zulässt oder einschränkt. Durch die Verwendung des Verfahrens zur Bereitstellung der Attestierungsinformation wird gewährleistet, dass das Kommunikationsgerät das Gerät in sicherer Art und Weise, beispielsweise im Rahmen einer Produktion eines Produktes, einsetzen kann.

Die obenstehenden Verfahren können jeweils auch als Computerimplementiertes Verfahren realisiert und implementiert werden.

Die Erfindung und ihre Weiterbildungen werden anhand von Zeichnungen näher erläutert. Im Einzelnen zeigen:
- Fig. 1: Technische Anlage mit mehreren Geräten (Stand der Technik)
- Fig. 2: Technische Anlage mit mehreren Geräten, bei der eine zentrale Attestierung vorgesehen ist
- Fig. 3: Textuelle Darstellung einer Attestierungsinformation

Elemente mit gleicher Funktion und Wirkungsweise sind in den Figuren mit denselben Bezugszeichen versehen.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne, dass dies expliziert in dem jeweiligen Ausführungsbeispiel genannt sein muss.

Fig. 1 ist im Rahmen der Einleitung bereits näher erläutert worden.

Fig. 2 zeigt ein erstes Ausführungsbeispiel der Erfindung. Dabei soll ein Kommunikationsgerät KOG vor Start einer Produktion eines Produktes prüfen, ob ein Gerät GER einer Produktionsanlage bereits eine aktuelle Konfiguration KON aufweist, die zur Produktion des Produktes benötigt oder erwartet wird. Hierzu möchte das Kommunikationsgerät eine Gültigkeit einer aktuellen Konfigurationsinformation des Geräts attestiert bekommen. Die aktuelle Konfigurationsinformation betrifft zwei Parameter, mit denen das Gerät zum einen eine Geschwindigkeit und zum anderen eine Richtung eines Förderbands steuern kann.

Das Gerät wird von einer Gerätemanagementeinheit GME verwaltet. Hierzu kann das Gerät mit der Gerätemanagementeinheit GME über einen kryptographisch-gesicherten Datenkanal kommunizieren, über den die Gerätemanagementeinheit dem Gerät eine aktuelle Konfiguration KON in Form einer Konfigurationsinformation KIN übermittelt. Die Konfigurationsinformation umfasst beispielsweise zwei Parameter, die für einen Prozessschritt für die Produktion konfiguriert werden. Ferner kann die Konfigurationsinformation auch ein Update einer Betriebssystemsoftware des Geräts oder sicherheitsrelevante Einstellungen des Geräts umfassen. Das Gerät kann die Gerätemanagementeinheit über unvorhergesehene Ereignisse, wie beispielsweise Fehler im Programmablauf und empfangene Nachrichten, die von dem Gerät nicht verstanden werden, informieren.

Zum Ermitteln der Gültigkeit der Konfigurationsinformation schickt das Kommunikationsgerät eine Anfragenachricht AFN über ein Netzwerk NET zu dem Gerät GER. Das Netzwerk, beispielsweise ein Local Area Network (LAN), verbindet an das Netzwerk angeschlossene Geräte/Einheiten datentechnisch, beispielsweise über ein Internetprotokoll (IP). Das Gerät empfängt die Anfragenachricht AFN. Da es mit dem Inhalt der Anfragenachricht nichts anfangen kann, leitet es diese Nachricht an seine Gerätemanagementeinheit GME weiter.

Die Gerätemanagementeinheit GME versteht den Inhalt der Anfragenachricht und schickt eine Attestierungsanfragenachricht AAN an eine ihr zugeordnete Attestierungseinheit ATE. Die Attestierungseinheit ATE hat Zugriff auf die aktuelle Konfigurationsinformation KIN des Geräts und erstellt mithilfe ihres Trusted Plattform Moduls TPM eine Attestierungsinformation ATI in Form einer Attestierungsantwortnachricht AWN, die zum einen eine kryptografisch geschützte Datenstruktur der Konfigurationsinformation des Geräts aufweist. Zum anderen umfasst die Attestierungsantwortnachricht AWN eine Information, dass das Gerät durch die Gerätemanagementeinheit verwaltet wird. Die Gerätemanagementeinheit GME empfängt die Attestierungsantwortnachricht AWN und leitet diese in Form einer Antwortnachricht ANN an das Kommunikationsgerät KOG weiter.

Das Kommunikationsgerät KOG empfängt die Antwortnacht ANN und kann an dessen Inhalt erkennen, dass die Konfigurationsinformation KIN, also die aktuelle Konfiguration KON, bereits im Gerät GER aktuell so vorliegt, dass das Kommunikationsgerät KOG die Produktion mit Hilfe des Geräts GER durchführen kann, beispielsweise getriggert durch ein Steuerkommando.

Figur 3 zeigt als textuell dargestelltes Beispiel einen möglichen Aufbau der Attestierungsinformation ATI, auch als Managed Device Attestation im Englischen bezeichnet. Hierbei umfasst die Attestierungsinformation eine Identifizierungsinformation ID1 (deviceID) desjenigen Gerätes GER, auf das sich die Attestierungsinformation bezieht. Es kann sich beispielsweise um eine Seriennummer ID2 (serialNumber) oder um eine MAC-Adresse (nicht dargestellt) des Geräts GER handeln. Weiterhin umfasst die Attestierungsinformation eine Angabe zu deren zeitlichen Gültigkeitsbereich ID3 (validFrom, validTo), die angibt, wann die Attestierungsinformation gültig ist. Bei wird dieser zeitlichen Gültigkeitsbereich mit einer jeweiligen Zeitangabe ID4 (time) näher definiert, beispielsweise Datum und Uhrzeit. Die Attestierungsinformation enthält zudem eine Angabe, dass das Gerät ein verwaltetes Gerät ist ("managed device), siehe ID5, wobei die durch das Akronym true ID6 positiv bestätigt werden kann. Zudem zeigt die Attestierungsinformation eine Identifizierungsinformation ID7 des Gerätemanagementservers, der dieses Gerät verwaltet (dmServer), eine Angabe ID8 zur organisatorischen Einheit (dmServerOrg), wie beispielsweise zur Siemens AG, die den Gerätemanagementserver betreibt und die dadurch über die Kontrolle über die Konfiguration des Geräts GER verfügt, und eine Angabe ID9 zu der Gerätekonfigurationspolicy (dmServerDevicePolicy), die auf dem Gerät GER durch den Gerätemanagementserver umgesetzt ist. Die Attestierungsinformation ist durch eine kryptographische Prüfsumme ID10, hier eine digitale Signatur (Signature), kryptographiegeschützt.

### Bezugszeichenliste

- NET: Netzwerk
- ATE: Attestierungseinheit
- GME: Gerätemanagementeinheit
- KIN: Konfigurationsinformation
- KON: aktuelle Konfiguration
- GER: Gerät
- ATI: Attestierungsinformation
- AT1: erste Attestierungsinformation
- AT2: zweite Attestierungsinformation
- AFN: Anfragenachricht
- AAN: Attestierungsanfragenachricht
- ANN: Antwortnachricht
- AWN: Attestierungsanwortnachricht
- KOG: Kommunikationsgerät
- ZPT: Zeitpunkt (einer Erzeugung der Attestierungsinformation)
- GTI: Gerätespezifische Attestierungsinformation

## Patentansprüche

1. Verfahren zum Bereitstellen einer Attestierungsinformation (ATI) betreffend einer Konfigurationsinformation (KIN) eines Geräts (GER), wobei eine aktuelle Konfiguration (KON) des Geräts (GER) mittels der Konfigurationsinformation (KIN) durch eine Gerätemanagementeinheit (GME) verwaltet wird,
**dadurch gekennzeichnet, dass**
die Attestierungsinformation (ATI) auf Basis der Konfigurationsinformation (KIN) durch eine Attestierungseinheit (ATE) erstellt wird, die der Gerätemanagementeinheit (GME) zugeordnet ist.

2. Verfahren nach Anspruch 1, bei dem die Attestierungsinformation (ATI) zumindest eine der folgenden Informationen aufweist:
- die Konfiguration des Geräts wird von der Gerätemanagementeinheit verwaltet;
- ein Ist-Zustand der Konfiguration des Geräts;
- ein Soll-Zustand der Konfiguration des Geräts;
- eine Gültigkeitsdauer der Konfigurationsinformation (KIN);
- eine Art einer Authentisierung des Geräts gegenüber der Gerätemanagementeinheit und/oder der Gerätemanagementeinheit gegenüber dem Gerät;
- eine eindeutige Identifikationsinformation des Geräts, insbesondere seine Seriennummer, seine MAC-Adresse
- Lokale Konfigurationseinstellungen des Geräts (GER);
- Fest integrierte oder lösbar verbundene Hardware-Komponenten des Geräts;
- eine Angabe eines Produktionsauftrags und/oder eines Produktionsschritts, für die die Attestierungsinformation (ATI) gültig ist;
- eine Angabe zu einem Ergebnis eines Security Selbsttest.

3. Verfahren nach einem der vorangegangenen Ansprüche, bei dem die Attestierungsinformation (ATI) zu einem Zeitpunkt einer Änderung der Konfigurationsinformation (KIN) des Geräts (GER) erzeugt wird.

4. Verfahren nach einem der vorangegangenen Ansprüche, bei dem die Attestierungsinformation (ATI) nach einem Zeitpunkt (ZPT) einer Änderung der Konfigurationsinformation (KIN) des Geräts (GER) erzeugt wird, wobei der Zeitpunkt (ZPT) derart gewählt wird, dass sich das Gerät (GER) in einem Ruhezustand oder einem Wartungszustand befindet.

5. Verfahren nach einem der vorangegangenen Ansprüche, bei dem die Attestierungsinformation (ATI) eine Angabe über deren Erzeugung aufweist.

6. Verfahren nach einem der vorangegangenen Ansprüche, bei dem die Attestierungsinformation (ATI) eine gerätespezifische Attestierungsinformation (GTI) aufweist, wobei die gerätespezifische Attestierungsinformation durch das Gerät selbst erzeugt wird.

7. Verfahren nach einem der vorangegangenen Ansprüche, bei dem die Erzeugung der Attestierungsinformation (ATI) eine Prüfung, ob eine Authentifizierung des Geräts (GER) gegenüber der Gerätemanagementeinheit (GME) erfolgreich gewesen ist, umfasst, wobei die Attestierungsinformation (ATI) das Ergebnis dieser Prüfung anzeigt.

8. Verfahren nach einem der vorangegangenen Ansprüche, bei dem das Bereitstellen ferner umfasst, dass eine Anfragenachricht (AFN) eines Kommunikationsgeräts (KOG) zum Bereitstellen der Attestierungsinformation (ATI) empfangen wird und die Attestierungsinformation (ATI) mittels einer Antwortnachricht (ANN) dem Kommunikationsgerät (KOG) zugestellt wird.

9. Verfahren nach Anspruch 8, bei dem die an das Gerät (GER) gerichtete Anfragenachricht (AFN) durch das Gerät (GER) an die Gerätemanagementeinheit (GME) weitergeleitet oder ohne Zustellung an das Gerät (GER) an die Gerätemanagementeinheit (GME) umgeleitet wird.

10. Verfahren nach Anspruch 8 oder 9, bei dem durch die Gerätemanagementeinheit (GME) die Anfragenachricht (AFN) aus einem Datenverkehr zwischen Gerät (GER) und Kommunikationsgerät (KOG) herausgefiltert wird.

11. Vorrichtung zum Durchführen eines Verfahrens nach einem der Ansprüche 1 bis 10, **dadurch gekennzeichnet, dass** mittels einem oder mehrerer Module (MOD) einzelne Schritte des Verfahrens implementierbar und ausführbar sind.

12. Verfahren zum Verwenden einer Attestierungsinformation (ATI), die gemäß einem der Ansprüche 1 bis 10 gebildet ist, **dadurch gekennzeichnet, dass** ein Kommunikationsgerät (KOG) eine Kommunikation mit dem Gerät (GER) in Abhängigkeit einer Prüfung der Attestierungsinformation (ATI) mit eigenen Regeln (REG) steuert, insbesondere einen Zugriff durch und/oder auf das Gerät (GER) und/oder einen Datenaustausch mit dem Gerät (GER) sperrt, zulässt oder einschränkt.
